(19) Europäisches Patentamt
European Patent Office
Office européen des brevets

(11) **EP 1 354 183 B1**

(12) **FASCICULE DE BREVET EUROPEEN**

(45) Date de publication et mention de la délivrance du brevet:
**24.03.2010 Bulletin 2010/12**

(21) Numéro de dépôt: **01986425.5**

(22) Date de dépôt: **19.12.2001**

(51) Int Cl.:
***G01M 17/007*** *(2006.01)*

(86) Numéro de dépôt international:
**PCT/EP2001/015045**

(87) Numéro de publication internationale:
**WO 2002/055981 (18.07.2002 Gazette 2002/29)**

(54) **METHODE DE PREVISION DU CONFORT A L'INTERIEUR D'UN VEHICULE**

VERFAHREN ZUR VORHERSAGE DES KOMFORTGRADES EINES FAHRZEUGES

METHOD FOR FORECASTING COMFORT INSIDE A VEHICLE

(84) Etats contractants désignés:
**AT BE CH CY DE DK ES FI FR GB GR IE IT LI LU MC NL PT SE TR**

(30) Priorité: **12.01.2001 FR 0100556**

(43) Date de publication de la demande:
**22.10.2003 Bulletin 2003/43**

(73) Titulaires:
• **Société de Technologie Michelin 63000 Clermont-Ferrand Cedex 09 (FR)**
• **Michelin Recherche et Technique S.A. 1763 Granges-Paccot (CH)**

(72) Inventeurs:
• **DORMEGNIE, Eric F-6300 Clermont-Ferrand (FR)**
• **FABRY, Pierre F-63100 Clermont-Ferrand (FR)**

(74) Mandataire: **Diernaz, Christian et al Michelin & Cie Service SGD/LG/PI-LAD 63040 Clermont-Ferrand Cedex 09 (FR)**

(56) Documents cités:
**EP-A- 0 886 130**

**Description**

L'invention concerne une méthode de prévision des niveaux acoustique et vibratoire atteints à l'intérieur d'un véhicule roulant sur un sol lisse, ce véhicule étant équipé d'ensembles montés composés de pneumatiques montés sur leurs roues de montage.

Malgré tout le soin pris pour la fabrication des différents éléments composant un ensemble (pneumatique, roue) et leur assemblage avant montage sur un véhicule, il est connu que tout ensemble monté présente un plus ou moins grand nombre d'irrégularités ou non-uniformités au tour de roue. Lorsque le véhicule roule, ces irrégularités ou non uniformités provoquent une excitation vibratoire des différents constituants d'un véhicule lorsque ledit ensemble équipe ledit véhicule et cela de manières éventuellement diverses et variées selon la vitesse dudit véhicule.

Par non uniformité d'un ensemble monté ou d'un ensemble tournant, on entend une irrégularité pouvant être liée, entre autres, à :

- un ou des défauts ou irrégularités de répartition de masses, de rigidité de l'ensemble monté;

- un montage excentré de la roue sur le véhicule ;

- des défauts géométriques de la roue ;

- un mauvais montage du pneumatique sur sa roue.

Ces irrégularités conduisent à des variations cycliques d'efforts au niveau des centres roues et/ou en tout autre point d'attache du système de liaison au sol du véhicule. Par système de liaison au sol, on entend un sous-ensemble d'éléments du véhicule assurant le lien entre la caisse du véhicule et une ou plusieurs des surfaces de contact entre le véhicule et le sol. Ce sous-ensemble est déterminé a priori et comprend par exemple toutes les pièces mécaniques du véhicule situées entre au moins un point de fixation à la caisse dudit véhicule et au moins une empreinte de chaque pneumatique équipant ledit véhicule ; dans cet exemple, au moins un pneumatique est inclus dans le système de liaison au sol.

Ces variations cycliques d'efforts résultant des non uniformités se manifestent, lors d'un roulage, par des vibrations du plancher du véhicule, des sièges, du volant. Une nuisance de nature acoustique peut également apparaître, un bruit étant créé à l'intérieur du véhicule par les vibrations de différentes parties dudit véhicule. Le niveau de gêne perçu dépend du véhicule et de la vitesse de roulage (il existe d'ailleurs des vitesses critiques où la gêne perçue est maximale), mais principalement du niveau de la non uniformité des ensembles tournants.

Dans ce qui suit, on entend par "performance confort" le niveau acoustique et vibratoire mesuré à l'intérieur d'un véhicule donné équipé avec un train d'ensembles montés.

Il est connu de l'homme du métier une méthode d'évaluation de la performance confort d'un nouveau pneumatique pour un véhicule donné, selon laquelle on réalise des mesures de bruit et de vibrations dans l'habitacle d'un véhicule roulant sur une portion de route lisse, en balayant différents niveaux de non uniformité (par exemple 10 grammes, 20 grammes, 30 grammes de balourd) pour les quatre ensembles montés du véhicule sur toute la plage des vitesses du véhicule afin d'être sûr d'avoir évalué la gêne maximale. Cette méthode nécessite toutefois de disposer du véhicule et ne peut être réalisée que dans des conditions météorologiques favorables ce qui induit un temps d'immobilisation parfois excessivement long et en conséquence un surcoût. Cette méthode est en outre longue et fastidieuse pour l'opérateur, sujette à des dispersions de mesure importantes, coûteuse dans la phase de mise au point d'un pneumatique pour un véhicule donné.

L'objet de l'invention est une méthode de prévision de la performance confort (niveau de bruit et de vibration) qui ne présente pas les inconvénients de la méthode qui viennent d'être rappelés.

Dans ce but, il est proposé une méthode de prévision du bruit et des vibrations dans l'habitacle d'un véhicule équipé d'ensembles montés d'essai (EME) et roulant à une vitesse donnée V sur un sol lisse, cette méthode consistant à multiplier une fonction de transfert globale du véhicule équipé d'ensembles montés de référence par des efforts résultant au centre roue de l'ensemble monté d'essai, cet ensemble monté supportant une charge identique à celle mesurée sur le véhicule et roulant sur le même sol. La méthode proposée comporte une première étape de détermination d'une fonction de transfert globale du véhicule en utilisant un ensemble monté de référence (EMR) et une deuxième étape dans laquelle on mesure des efforts au centre roue de l'ensemble monté d'essai.

On entend par ensemble monté de référence (EMR), un ensemble monté utilisé pour estimer la fonction de transfert globale, cet ensemble monté de référence étant préparé de manière à comporter un nombre N d'irrégularités de dimensions appropriées de manière à exciter le véhicule dans une gamme de fréquences Fmin, Fmax dans l'étendue des vitesses (Vmin, Vmax) choisies. Par ensemble monté d'essai (EME), on désigne un ensemble monté dont on cherche à prévoir la performance confort sur véhicule compte tenu des non uniformités que cet ensemble monté d'essai peut comporter. Ces ensembles montés (EMR, EME) sont composés d'une roue prévue pour être montée sur le véhicule (conformes aux spécifications constructeur) et d'un pneumatique également prévu pour être monté sur le véhicule. En règle générale, la roue de montage comporte des parties formant des sièges et des parties formant des rebords, ces parties étant destinées à coopérer avec des bourrelets du pneumatique lorsque ce dernier est monté sur cette roue. En outre, le pneumatique comprend une bande de roulement dont la surface radialement à l'extérieur est destinée à entrer en contact avec la chaussée pendant le roulage ; des flancs relient la bande de roulement avec les bourrelets.

Principe de la méthode.

Il est proposé une méthode de prévision de la performance confort (bruit, vibrations) dans un véhicule équipé avec un ensemble monté d'essai EME dans une position choisie sur un véhicule roulant à une vitesse donnée V sur un moyen de roulage de type sol lisse permettant d'atteindre une vitesse équivalente maximale Vmax du véhicule (Vmax étant supérieure à la vitesse donnée V), cet ensemble EME comportant un plus ou moins grand nombre de défauts de non uniformité comme rappelé au début de cette description.

Cette méthode comprend les étapes suivantes :

(a) - préparer un ensemble monté de référence (EMR) comprenant un pneumatique et sa roue de montage, de façon que cet ensemble (EMR) de développement nD comporte un nombre N d'irrégularités sensiblement identiques et régulièrement réparties sur la circonférence de l'ensemble monté, ces irrégularités étant choisies pour exciter le véhicule dans une gamme de fréquences allant d'une fréquence minimale Fmin à une fréquence maximale Fmax au cours d'un roulage sur sol lisse, ce nombre N étant déterminé par la formule :

$$N = \text{Partie entière } (\frac{(F\max \times \pi D)}{V\max}) + 1$$

avec :

Fmax en Hertz, D en mètre, Vmax en mètre par seconde;

(b) - équiper le véhicule avec l'ensemble (EMR) dans la position choisie sur le véhicule ;

(c) - placer le véhicule de façon que l'ensemble (EMR) repose sur le moyen de roulage apte à mettre en rotation ledit ensemble (EMR) ;

(d) - enregistrer le bruit et les vibrations en au moins un point à l'intérieur du véhicule en réalisant un balayage des vitesses de rotation de l'ensemble (EMR) dans une gamme de vitesses de rotation (ωmin, ωmax) équivalentes aux vitesses (Vmin, Vmax) du véhicule, la vitesse Vmin étant définie par la relation :

$$V\min = \frac{(F\min \times \pi D)}{N}$$

(e) - mesurer les efforts résultants s'exerçant au centre roue de l'ensemble (EMR), cet ensemble étant monté roulant soit sur le moyen de roulage utilisé à l'étape (c) soit sur un moyen de roulage équivalent à celui employé à l'étape (c) et soumis aux conditions de roulage (sens de rotation, pression du pneumatique, charge, gamme de vitesses de rotation) correspondant à la position choisie sur le véhicule ;

(f) - calculer pour cette position sur le véhicule une fonction de transfert globale (FT) entre les efforts mesurés au centre roue de l'ensemble (EMR) et le bruit et les vibrations dans le véhicule ;

(g) - mesurer les efforts résultants au centre roue de l'ensemble monté d'essai (EME) roulant soit sur le moyen de roulage de l'étape (c) soit sur un moyen de roulage équivalent à celui employé à l'étape (c) et dans des conditions de pression du pneumatique et de charge identiques à celles employées à l'étape (c) et à une vitesse de rotation équivalente à la vitesse V;

(h) - multiplier les efforts obtenus à l'étape (g) par la fonction de transfert globale (FT) calculée à l'étape (f) pour obtenir une prévision du bruit et des vibrations dans le véhicule roulant à la vitesse V, ledit véhicule étant équipé avec l'ensemble monté d'essai (EME) dans la position choisie.

Par moyen de roulage, on entend un ensemble de moyens permettant de soumettre un ensemble monté en condition de chargement approprié et d'entraîner en rotation ledit ensemble monté et notamment un volant, un banc à rouleaux ou encore une machine de test comprenant une bande plate défilant sous le pneumatique de l'ensemble monté.

Afin d'obtenir un spectre sur toute la gamme des fréquences choisies, on effectue les mesures en faisant un balayage en vitesse de rotation de l'ensemble monté de référence. Ce balayage en vitesse peut être réalisé de manière continue par accélération entre la vitesse minimale et la vitesse maximale ou bien par décélération entre ces mêmes vitesses; ce balayage peut également être réalisé pour une pluralité de vitesses comprises entre ces vitesses minimale et maximale.

Un avantage de la présente méthode réside dans le fait que ce sont effectivement les efforts réels au centre roue qui sont impliqués dans la détermination de la fonction de transfert globale et dans son utilisation ultérieure pour caractériser un nouvel ensemble monté.

Les mesures décrites aux étapes (e) et (g) ci-dessus sont prévues pour être faites au niveau du centre roue des ensembles montés (EMR) et (EME); il est bien sûr possible de les réaliser en considérant non plus seulement un ensemble monté mais un système plus complexe intégrant à la fois ledit ensemble monté et des éléments particuliers de liaison dudit ensemble avec le véhicule, comme par exemple des éléments de la suspension. Dans ce cas, les points où sont effectués les mesures correspondent aux points d'attache de ces éléments particuliers avec le véhicule.

La méthode répond à l'objectif qui est d'évaluer, pour un véhicule donné, la performance confort d'un ensemble monté présentant un niveau de non uniformité donné. Avec la méthode proposée, il n'est pas nécessaire de disposer du véhicule pour tout nouvel ensemble monté différent des ensembles montés de référence (EMR) dès lors que la fonction de transfert globale du véhicule est établie sur un moyen de roulage qui est également le moyen de roulage employé pour la mesure des efforts centre roue de l'ensemble monté seul (ou en tout autre point d'attache choisi pour la mesure).

En outre et de manière surprenante, il a été constaté qu'il était possible, pour un véhicule donné, de s'affranchir de la dimension du pneumatique. Ceci signifie que pour un véhicule, prévu pour être équipé avec des dimensions de pneumatique différentes (par exemple entre l'essieu avant et l'essieu l'arrière), il est possible de déterminer une fonction de transfert globale applicable pour toutes les dimensions acceptées par ledit véhicule.

Par fonction de transfert globale, on entend une fonction qui comprend deux parties, une première partie concerne le bruit dans l'habitacle du véhicule et une seconde partie les vibrations en certains points prédéterminés dans le même habitacle. La détermination de la fonction de transfert globale résulte de la mise en oeuvre d'une série de mesures sur le véhicule équipé de l'ensemble monté de référence (EMR) et d'une série de mesures sur l'ensemble monté de référence (EMR) seul, ces mesures correspondant aux mesures telles que présentées dans le principe de la méthode.

En pratique, avec un même pneumatique et une même roue, il sera possible de créer plusieurs ensembles montés d'essai (EME) différents en modifiant soit le montage dudit pneumatique sur sa roue (c'est à dire la mise en place du pneumatique sur sa roue), soit l'équilibrage de l'ensemble (c'est-à-dire la répartition des masses tournantes), soit encore le montage de l'ensemble sur l'essieu. Par ces modifications, on change la non uniformité de l'ensemble monté, qu'il est bien sûr possible d'évaluer par un enregistrement des efforts au centre roue; l'utilisation de la méthode selon l'invention conduit à une prévision du bruit et des vibrations dans le véhicule résultant de ce changement.

Pour travailler entre une fréquence nulle et la fréquence minimale Fmin, on créé un balourd sur l'ensemble monté de référence. Après équilibrage de cet ensemble monté de référence, on fixe une masse déterminée, comprise entre 30 et 50 grammes, à côté de la valve afin de créer un balourd dynamique (c'est-à-dire un déséquilibre dans la répartition des masses tournantes).

Premier mode de formation des irrégularités de l'ensemble monté de référence (EMR).

Sur un pneumatique pourvu d'une bande de roulement initialement lisse, on réalise une pluralité d'irrégularités sensiblement identiques et réparties de manière régulière sur la circonférence de la bande de roulement du pneumatique. Ces irrégularités consistent en une série d'encoches ayant sensiblement la même largeur et une profondeur comprise entre 0.5 et 3 mm; ces encoches s'étendent sur toute la largeur de la bande de roulement. Préférentiellement, les encoches font avec l'axe de rotation du pneumatique un angle au plus égal à 30°.

Ces entailles peuvent être réalisées par taillage sur le pneumatique moulé et vulcanisé ou par moulage au cours du moulage du pneumatique.

Le nombre d'encoches N, défini par la formule ci-après, est fonction de la fréquence maximale choisie et de la vitesse maximale admissible pour le véhicule :

$$N = \text{Partie entière }(\frac{(F\max \times \pi D)}{V\max}) + 1$$

avec :

Fmax en Hz

D en mètre

Vmax en mètre/seconde.

Préférentiellement, les encoches de largeur moyenne Le sont disposées régulièrement dans la direction circonférentielle avec un pas moyen P, la largeur moyenne Le et le pas P satisfaisant la relation suivante :

$$0.05 \le K \le 5$$

avec

$$K = \frac{Le}{P - Le}$$

Lorsque ce rapport K est inférieur à 0.05, le niveau de non uniformité n'est pas suffisant, tandis que lorsque ce même rapport est supérieur à 5, la rigidité de la bande de roulement s'en trouve trop affectée.

Deuxième mode de réalisation des irrégularités de l'ensemble monté de référence (EMR).

Une autre variante consiste à placer sur la bande de roulement (quelle soit lisse ou pourvue d'une sculpture), une série de surépaisseurs s'étendant en direction transversale (au plus 30° par rapport à la direction axiale du pneumatique).

Troisième mode de réalisation des irrégularités.

On interpose une pluralité de N cales de même largeur uniformément réparties entre un rebord de la jante et le bourrelet du pneumatique. Ces cales ont une épaisseur allant de 4 à 6 mm et elles s'étendent dans le sens radial sur toute la hauteur du rebord. Il est bien sûr possible d'augmenter l'effet de non uniformité en disposant des cales sur les deux rebords.

Quatrième mode de réalisation des irrégularités.

On dispose, de manière uniforme, une pluralité de N cales de même épaisseur et de même largeur entre l'un au moins des bourrelets du pneumatique et le siège de sa roue de montage.

Cinquième mode de réalisation des irrégularités.

On modifie la rigidité de l'armature de carcasse dans les flancs du pneumatique, par exemple en réalisant N secteurs comportant des coupures des renforts de cette armature, ces N secteurs étant répartis uniformément dans la direction circonférentielle, tout en prenant soin de maintenir l'étanchéité dudit pneumatique.

La méthode selon l'invention est illustrée par les figures suivantes selon lesquelles :

La Figure 1 montre partiellement un pneumatique composant l'ensemble monté de référence (EMR) pourvu d'une pluralité d'entailles transversales;

La Figure 2 montre un enregistrement des efforts dans la direction longitudinale appliqués au centre roue de l'ensemble monté d'essai (EME);

La Figure 3 montre un enregistrement des efforts s'exerçant dans la direction perpendiculaire au moyen de roulage et appliqués au centre roue de l'ensemble monté d'essai (EME);

La Figure 4 montre une comparaison des accélérations perpendiculaires au plan du volant obtenues par le modèle selon l'invention et par la mesure avec l'ensemble monté d'essai correspondant à celui des figures 2 et 3;

La Figure 5 montre une comparaison des accélérations perpendiculaires au plancher du véhicule obtenues par le modèle selon l'invention et par la mesure avec l'ensemble monté d'essai correspondant à celui des figures 2 et 3.

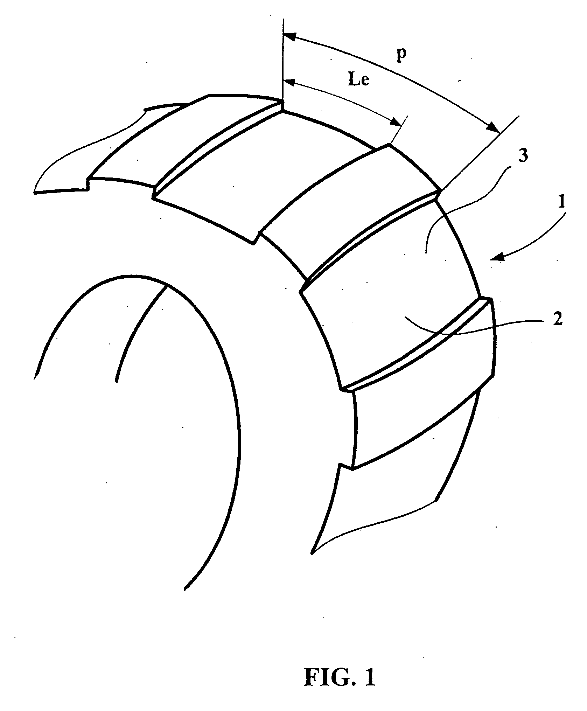

Sur la figure 1, on distingue une vue partielle d'une bande de roulement 2 d'un pneumatique 1 de dimension 195/65 R 15 et de développement circonférentiel égal à 1.935 m, destiné à être monté sur une roue de montage pour former un ensemble monté de référence (EMR) destiné à équiper la position avant gauche d'un véhicule de tourisme dont la vitesse Vmax d'utilisation est de 170 km/h. On réalise sur la surface extérieure de la bande de roulement de ce pneumatique et sur la totalité de sa largeur un nombre N d'entailles ou encoches 3 transversales de profondeur égale à 2. mm et de largeur égale à 96.5 mm. Le rôle de ces N entailles 3 est d'exciter le véhicule avec des amplitudes importantes lorsque cet ensemble (EMR) équipe ce véhicule et cela dans une gamme de fréquences allant de 20 à 290 Hz.

Le nombre N d'entailles, ici égal à 12, est déterminé en fonction de la fréquence maximale du domaine d'analyse, de la vitesse maximale et du développement de l'ensemble de référence. Ce nombre N est égal à la partie entière de

$$( \frac{290}{1.935 \times 47} )$$ soit 11, à laquelle on ajoute 1.

Cet ensemble (EMR) est utilisé pour déterminer une fonction de transfert dudit véhicule avec la méthode selon l'invention. Dans ce but, l'ensemble (EMR) monté sur le véhicule est gonflé à sa pression recommandée d'utilisation (2.1 bars) pour supporter la charge nominale du véhicule; il est ensuite placé sur un volant de roulage de 5 mètres de développement dont la surface de roulage est lisse (c'est-à-dire qu'elle ne comporte pas d'éléments de relief de hauteur supérieure à la moitié de la profondeur des entailles réalisées sur le pneumatique de l'ensemble référence) et entraîné en rotation par ledit volant. Avant de procéder aux mesures, on réalise un roulage de préparation à une vitesse sensiblement moitié de la vitesse maximale.

Des enregistreurs d'efforts sont placés au centre roue de l'ensemble (EMR) afin d'enregistrer les variations d'efforts pendant le roulage et des accéléromètres sont placés sur le volant de direction du véhicule et sur le plancher dudit véhicule.

Après le roulage de préparation, on augmente la vitesse de rotation jusqu'à une vitesse de rotation équivalente à une vitesse du véhicule égale à la vitesse maximale. Ensuite, on procède à une acquisition simultanée de la vitesse réelle de rotation et des signaux d'efforts et d'accélérations au cours d'un roulage sur le volant pendant lequel la vitesse est progressivement réduite de 170 km/h à 10 km/h en 400 s (ce qui correspond à une décélération d'environ 0.4 km/h toutes les secondes).

Pour obtenir des excitations suffisantes à basse fréquence (c'est-à-dire entre 2 et 20 Hz), un balourd est créé par collage d'une masse de 40 grammes sur la roue de montage.

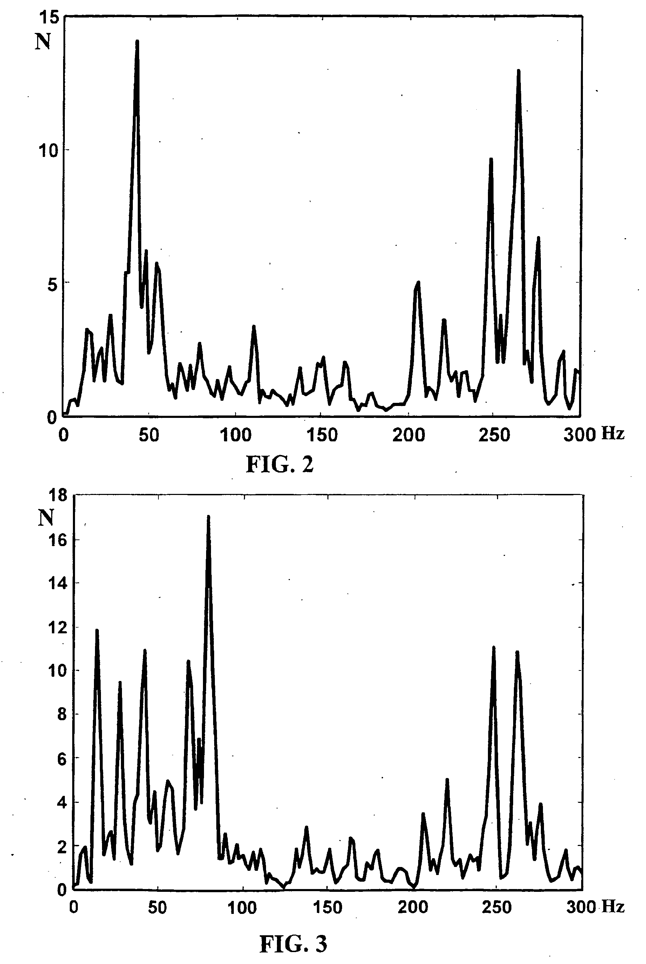

La figure 2 et la figure 3 présentent respectivement les efforts enregistrés au centre roue de l'ensemble monté d'essai (EME) dont on cherche à prédire l'incidence sur la performance confort du même véhicule que celui employé pour la détermination de la fonction de transfert globale précédemment décrite. Les axes portant les abscisses correspondent aux fréquences tandis que les axes des ordonnées correspondent aux efforts exercés par l'ensemble (EME) roulant sur le même moyen de roulage dans des conditions de pression, de chargement et de sens de rotation identiques aux conditions relevées pour l'ensemble (EMR) sur le véhicule à la vitesse choisie V ici égale à 90 km/h.

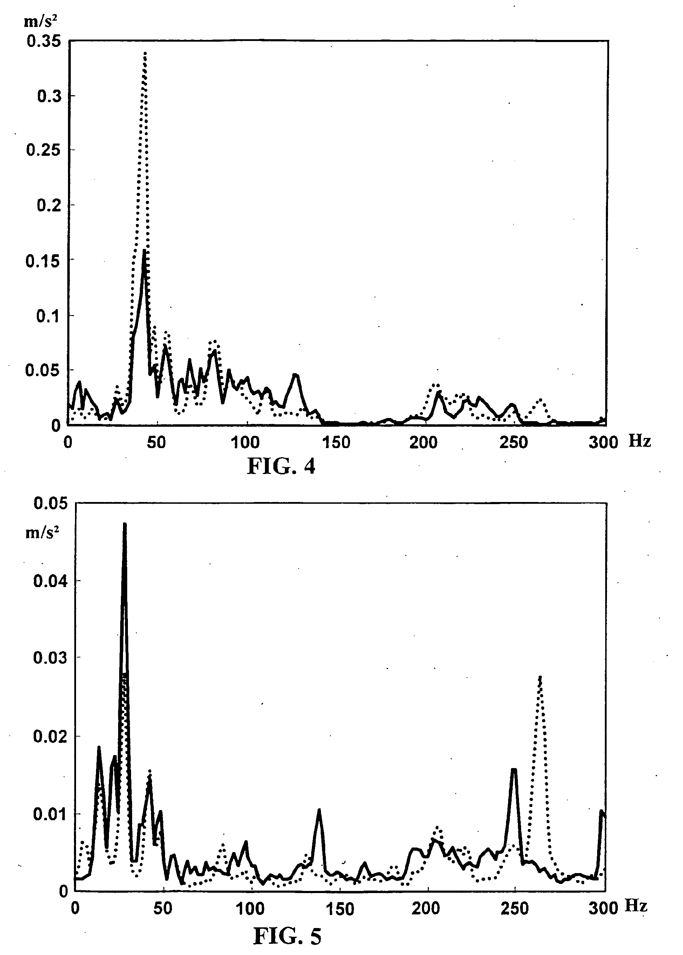

Après avoir effectué, à la vitesse choisie de 90 km/h, lés mesures des efforts au centre roue de l'ensemble (EME) dans un test de roulage sur un moyen analogue à celui employé aux étapes précédentes avec l'ensemble (EMR) et en multipliant les efforts enregistrés par la fonction de transfert globale établie aux étapes précédentes, on obtient une prévision de spectre des accélérations au volant et au plancher du véhicule à la vitesse choisie. Sur les figures 4 et 5 sont comparées ces prévisions avec les valeurs obtenues par des mesures sur véhicule à cette vitesse.

La figure 4 montre, en trait plein, le spectre des accélérations enregistrées au volant dans une direction perpendiculaire au plan dudit volant, et en pointillés, le spectre des mêmes accélérations tel que prédit par le modèle selon l'invention à la vitesse de 90 km/h.

La figure 5 montre, en trait plein, le spectre des accélérations enregistrées au plancher dans une direction perpendiculaire audit plancher, et en trait pointillé, le spectre des mêmes accélérations tel que prédit par le modèle selon l'invention à la vitesse de 90 km/h.

On constate à l'examen de ces figures que le niveau de prévision est satisfaisant.

Avec la méthode selon l'invention, il est par conséquent aisé de prévoir la performance confort liée aux non uniformités d'autant d'ensembles montés que l'on souhaite dès lors que la fonction de transfert globale a été déterminé selon la méthode décrite sur un véhicule avec un ensemble monté de référence. Le coût de cette prévision sera, pour chaque ensemble monté, égal au coût d'une mesure à centre roue fixe. On voit ainsi tout l'intérêt que représente cette méthode pour la mise au point d'un ensemble monté sur un véhicule prototype dont il n'est possible de disposer que pendant un temps bref.

Grâce à la méthode selon l'invention, on peut envisager la possibilité d'un échange de données entre un manufacturier de pneumatiques et un constructeur de véhicules sans que le manufacturier ait pu disposer du véhicule, le constructeur dudit véhicule s'occupant de réaliser l'essai sur le véhicule et de fournir ensuite la fonction de transfert globale dudit véhicule au manufacturier.

La méthode décrite ici est applicable à différents types de véhicules (tourisme, camionnette, poids lourds). Les roulages effectués sur un volant peuvent être remplacés par un roulage sur banc à rouleau ou bien sur machine de roulage de type à bande plate ("flat track"). Enfin, certaines étapes expérimentales de la méthode peuvent être, partiellement ou en totalité, remplacées par des simulations numériques appropriées.

## Revendications

**1.** Méthode de prévision de la performance confort (bruit, vibrations) dans un véhicule équipé avec un ensemble monté d'essai (EME) dans une position choisie, cet ensemble comprenant un pneumatique monté sur une roue de montage ayant des sièges et rebords contre lesquels s'appuient des bourrelets du pneumatique, ledit véhicule roulant à une vitesse donnée V sur un moyen de roulage de type sol lisse permettant d'atteindre une vitesse équivalente maximale Vmax du véhicule (Vmax étant supérieure à la vitesse donnée V) cette méthode comprenant les étapes suivantes :

(a) - préparer un ensemble monté de référence (EMR) comprenant un pneumatique et sa roue de montage, de façon que cet ensemble (EMR) de développement $\pi D$ comporte N d'irrégularités sensiblement identiques et régulièrement réparties sur la circonférence de l'ensemble monté, ces irrégularités étant choisies pour exciter le véhicule dans une gamme de fréquences allant d'une fréquence minimale Fmin à une fréquence maximale Fmax au cours d'un roulage sur sol lisse, le nombre N étant déterminé par la formule :

$$N = \text{Partie entière } (\frac{(F\max \times \pi D)}{V\max}) + 1$$

avec : Fmax en Hertz, D en mètre, Vmax en mètre par seconde;

(b) - équiper le véhicule avec l'ensemble (EMR) dans la position choisie sur lé véhicule ;

(c) - placer le véhicule de façon que l'ensemble (EMR) repose sur le moyen de roulage apte à mettre en rotation ledit ensemble (EMR) ;

(d) - enregistrer le bruit et les vibrations en au moins un point à l'intérieur du véhicule en procédant à un balayage de vitesses de rotation de l'ensemble (EMR) dans une gamme de vitesse de rotation équivalentes aux vitesses (Vmin, Vmax) du véhicule, la vitesse Vmin étant définie par la relation :

$$V\text{min} = \frac{(F\min \times \pi D)}{N}$$

(e) - mesurer les efforts résultants au centre roue de l'ensemble (EMR), cet ensemble étant monté roulant soit sur le moyen de roulage utilisé à l'étape (c) soit sur un moyen de roulage équivalent à celui employé à l'étape (c) et soumis aux conditions de roulage (sens de rotation, pression du pneumatique, charge, gamme de vitesses de rotation) correspondant à la position choisie sur le véhicule ;

(f) - calculer pour cette position sur le véhicule une fonction de transfert globale (FT) entre les efforts mesurés au centre roue de l'ensemble (EMR) et le bruit et les vibrations dans le véhicule ;

(g) - mesurer les efforts résultants au centre roue de l'ensemble monté d'essai (EME) roulant sur le moyen de roulage de l'étape (c) soit sur un moyen de roulage équivalent à celui employé à l'étape (c) et dans des conditions de pression du pneumatique et de charge identiques à celles employées à l'étape (c) et à une vitesse de rotation équivalente à la vitesse V;

(h) - multiplier les efforts obtenus à l'étape (g) par la fonction de transfert globale (FT) calculée à l'étape (f) pour obtenir une prévision du bruit et des vibrations dans le véhicule roulant à la vitesse V, ledit véhicule étant équipé avec l'ensemble monté d'essai (EME) dans la position choisie.

2. Méthode de prévision selon la revendication 1 **caractérisée en ce que** l'ensemble monté de référence (EMR) comprend une bande de roulement dont la surface extérieure forme une surface de roulement sur laquelle toutes les irrégularités sont localisées.

3. Méthode de prévision selon la revendication 2 **caractérisée en ce que** toutes les irrégularités consistent en une série d'encoches réalisées transversalement sur la bande de roulement et faisant un angle d'au plus 30° avec la direction transversale.

4. Méthode de prévision selon la revendication 3 **caractérisée en ce que** les encoches ont une largeur moyenne Le et sont disposées régulièrement dans la direction circonférentielle avec un pas moyen P, la largeur moyenne Le et le pas P satisfaisant la relation :

$$0.05 \leq \frac{Le}{P - Le} \leq 5$$

5. Méthode de prévision selon la revendication 2 **caractérisée en ce que** toutes les irrégularités consistent en une série de surépaisseurs réalisées transversalement sur la bande de roulement et faisant un angle d'au plus 30° avec la direction transversale.

6. Méthode de prévision selon l'une des revendications 1 à 5 **caractérisée en ce que** les mesures sont effectuées durant un test de décélération uniforme entre la vitesse maximale Vmax et la vitesse minimale Vmin.

7. Méthode de prévision selon l'une des revendications 1 à 6 **caractérisée en ce que** pour réaliser des mesures à fréquence minimale (Fmin) petite ou nulle, une irrégularité de masse est rajoutée à l'ensemble monté de référence (EMR).

8. Méthode de prévision selon la revendication 1 **caractérisée en ce que** les irrégularités sont créées par l'interposition de N "cales" de dimensions appropriées régulièrement réparties entre l'un au moins des bourrelets du pneumatique et sa roue de montage de façon à rapprocher localement lesdits bourrelets dans la direction axiale.

9. Méthode de prévision selon la revendication 1 **caractérisée en ce que** les irrégularités sont créées par l'interposition de N "cales" de dimensions appropriées régulièrement réparties entre l'un au moins des bourrelets du pneumatique et le siège de sa roue de montage.

10. Méthode de prévision selon la revendication 1 **caractérisée en ce que,** le pneumatique comprenant des flancs reliant les bourrelets du pneumatique à la bande de roulement, les irrégularités sont créées par l'interposition de N "cales" de dimensions appropriées régulièrement réparties entre l'un au moins des bourrelets du pneumatique et le siège de sa roue de montage.

**Claims**

1. A method of forecasting the comfort performance (noise and vibrations) in a vehicle equipped with a test mounted assembly in a selected position, this assembly comprising a tyre mounted on a mounting wheel having seats and edges against which tyre beads are supported, the said vehicle travelling at a given speed V on a travel medium of the smooth ground type, allowing an equivalent maximum speed Vmax of the vehicle to be attained (Vmax being greater than the given speed V), this method comprising the following steps:

(a) - preparing a reference mounted assembly comprising a tyre and its mounting wheel, such that this reference mounted assembly of circumferential length πD has N irregularities which are substantially identical and regularly distributed over the circumference of the mounted assembly, these irregularities being selected to excite the vehicle in a range of frequencies from a minimum frequency Fmin to a maximum frequency Fmax in the course of travel over smooth ground, the number N being determined by the formula:

$$N = \text{integer part } \left(\frac{(F\max \times \pi D)}{V\max}\right) + 1$$

where : Fmax is in hertz, D is in metres and Vmax is in metres per second;

(b) - equipping the vehicle with the reference mounted assembly in the selected position on the vehicle;

(c) - positioning the vehicle such that the reference mounted assembly rests on the travel medium capable of causing the said reference mounted assembly to rotate;

(d) - recording the noise and vibrations at at least one point inside the vehicle by working through the speeds of rotation of the reference mounted assembly in a range of speeds of rotation equivalent to the speeds (Vmin, Vmax) of the vehicle, the speed Vmin being defined by the following equation:

$$Vmin = \frac{(F\min \times \pi D)}{N}$$

(e) - measuring the resulting forces exerted at the wheel centre of the reference mounted assembly, this assembly being mounted to travel either on the travel medium used in step (c) or on a travel medium equivalent to that used in step (c) and put under the conditions of travel (direction of rotation, tyre pressure, load, range of speeds of rotation) corresponding to the position selected on the vehicle;

(f) - calculating for this position on the vehicle an overall transfer function between the forces measured at the wheel centre of the reference mounted assembly and the noise and vibrations in the vehicle;

(g) - measuring the resulting forces at the wheel centre of the test mounted assembly travelling on the travel medium from step (c) or on a travel medium equivalent to that used in step (c), under conditions of tyre pressure and load identical to those used in step (c) at a speed of rotation equivalent to the speed V;

(h) - multiplying the forces obtained in step (g) by the overall transfer function calculated in step (f) to obtain a forecast of the noise and vibrations in the vehicle travelling at speed V, the said vehicle being equipped with the test mounted assembly in the selected position.

2. A method of forecasting according to Claim 1, **characterised in that** the reference mounted assembly comprises a tread whereof the outer surface forms a tread surface on which all the irregularities are located.

3. A method of forecasting according to Claim 2, **characterised in that** all the irregularities comprise a series of notches made transversely on the tread and forming an angle of at most 30° with the transverse direction.

4. A method of forecasting according to Claim 3, **characterised in that** the notches have a mean width Le and are disposed regularly in the circumferential direction at a mean pitch P, the relationship between the mean width Le and the pitch P being determined by the equation:

$$0.05 \le \frac{Le}{P - Le} \le 5$$

5. A method of forecasting according to Claim 2, **characterised in that** all the irregularities comprise a series of over-thick portions made transversely on the tread and forming an angle of at most 30° with the transverse direction.

6. A method of forecasting according to one of Claims 1 to 5, **characterised in that** the measurements are made during a test of uniform deceleration between the maximum speed Vmax and the minimum speed Vmin.

7. A method of forecasting according to one of Claims 1 to 6, **characterised in that** in order to make measurements at a minimum frequency (Fmin) which is small or zero, an irregularity of mass is added to the reference mounted assembly.

8. A method of forecasting according to Claim 1, **characterised in that** the irregularities are created by placing N insert blocks of appropriate dimensions distributed regularly between at least one of the tyre beads and its mounting wheel in order to bring the said beads into closer proximity in the axial direction.

9. A method of forecasting according to Claim 1, **characterised in that** the irregularities are created by placing N insert blocks of appropriate dimensions distributed regularly between at least one of the tyre beads and the seat of its mounting wheel.

10. A method of forecasting according to Claim 1, **characterised in that,** the tyre comprising sidewalls connecting the beads of the tyre to the tread, the irregularities are created by placing N insert blocks of appropriate dimensions distributed regularly between at least one of the tyre beads and the seat of its mounting wheel.

**Patentansprüche**

1. Verfahren zur Prognose der Komfortleistung (Geräusch, Vibrationen) in einem Fahrzeug, das mit einer montierten Testeinheit (EME) in einer gewählten Stellung ausgestattet ist, wobei diese Einheit einen auf ein Montagerad montierten Luftreifen enthält, das Sitze und Ränder hat, gegen die sich Wülste des Luftreifens anlegen, wobei das Fahrzeug mit einer gegebenen Geschwindigkeit V auf einer Rolleinrichtung vom Typ glatter Untergrund rollt, die es ermöglicht, eine maximale äquivalente Geschwindigkeit Vmax des Fahrzeugs zu erreichen (wobei Vmax höher ist als die gegebene Geschwindigkeit V), wobei dieses Verfahren die folgenden Schritte enthält:

(a) - Bereitstellen einer montierten Bezugseinheit (EMR), die einen Luftreifen und sein Montagerad enthält, derart, dass diese Einheit (EMR) mit einem Abrollumfang πD N im Wesentlichen gleiche und gleichmäßig auf dem Umfang der montierten Einheit verteilte Unregelmäßigkeiten aufweist, wobei diese Unregelmäßigkeiten gewählt werden, um das Fahrzeug während einer Fahrt auf glattem Untergrund in einem Frequenzbereich anzuregen, der von einer minimalen Frequenz Fmin bis zu einer maximalen Frequenz Fmax geht, wobei die Zahl N durch folgende Formel bestimmt wird:

$$N = \text{ganzzahliger Teil} \left( \frac{F\,max\,x\,\pi D}{V\,max} \right) + 1$$

mit:

Fmax in Hertz, D in Meter, Vmax in Meter pro Sekunde;

(b) - Ausstatten des Fahrzeugs mit der Einheit (EMR) in der gewählten Stellung am Fahrzeug;
(c) - Anordnen des Fahrzeugs derart, dass die Einheit (EMR) auf der Rolleinrichtung ruht, die die Einheit (EMR) in Drehung versetzen kann;
(d) - Aufzeichnen des Geräuschs und der Vibrationen an mindestens einem Punkt im Inneren des Fahrzeugs, indem ein Abtasten von Drehgeschwindigkeiten der Einheit (EMR) in einem Bereich von Drehgeschwindigkeiten, die äquivalent zu den Geschwindigkeiten (Vmin, Vmax) des Fahrzeugs sind, durchgeführt wird, wobei die Geschwindigkeit Vmin durch folgende Beziehung definiert wird:

$$Vmin = \frac{\left( F\,min\,x\,\pi D \right)}{N}$$

(e) - Messen der resultierenden Kräfte in der Radmitte der Einheit (EMR), wobei diese Einheit entweder auf der im Schritt (c) verwendeten Rolleinrichtung oder auf einer der im Schritt (c) verwendeten äquivalenten Rolleinrichtung rollend montiert und den Rollbedingungen (Drehrichtung, Druck des Luftreifens, Last, Drehgeschwindigkeitsbereich) ausgesetzt wird, die der gewählten Stellung am Fahrzeug entsprechen,

(f) - Berechnen, für diese Stellung am Fahrzeug, einer globalen Transferfunktion (FT) zwischen den in der Radmitte der Einheit (EMR) gemessenen Kräften und dem Geräusch und den Vibrationen im Fahrzeug;

(g) - Messen der resultierenden Kräfte in der Radmitte der montierten Testeinheit (EME), die entweder auf der Rolleinrichtung des Schritts (c) oder auf einer der im Schritt (c) verwendeten äquivalenten Rolleinrichtung und unter den gleichen Druck- und Lastbedingungen des Luftreifens wie denjenigen, die im Schritt (c) verwendet wurden, und mit einer Drehgeschwindigkeit gleichwertig der Geschwindigkeit V rollt;

(h) - Multiplizieren der im Schritt (g) erhaltenen Kräfte mit der im Schritt (f) berechneten globalen Transferfunktion (FT), um eine Prognose des Geräuschs und der Vibrationen im mit der Geschwindigkeit V fahrenden Fahrzeug zu erhalten, wobei das Fahrzeug mit der montierten Testeinheit (EME) in der gewählten Stellung ausgestattet ist.

2. Prognoseverfahren nach Anspruch 1, **dadurch gekennzeichnet, dass** die montierte Bezugseinheit (EMR) einen Laufstreifen enthält, dessen Außenfläche eine Lauffläche formt, auf der sich alle Unregelmäßigkeiten befinden.

3. Prognoseverfahren nach Anspruch 2, **dadurch gekennzeichnet, dass** alle Unregelmäßigkeiten aus eine Reihe von Einkerbungen bestehen, die quer auf dem Laufstreifen hergestellt werden und einen Winkel von höchstens 30° mit der Querrichtung bilden.

4. Prognoseverfahren nach Anspruch 3, **dadurch gekennzeichnet, dass** die Einkerbungen eine mittlere Breite Le haben und gleichmäßig in der Umfangsrichtung mit einer mittleren Teilung P angeordnet sind, wobei die mittlere Breite Le und die Teilung P die folgende Beziehung erfüllen:

$$0.05 \leq \frac{Le}{P - Le} \leq 5$$

5. Prognoseverfahren nach Anspruch 2, **dadurch gekennzeichnet, dass** alle Unregelmäßigkeiten aus einer Reihe von Überdicken bestehen, die quer auf dem Laufstreifen hergestellt werden und einen Winkel von höchstens 30° mit der Querrichtung bilden.

6. Prognoseverfahren nach einem der Ansprüche 1 bis 5, **dadurch gekennzeichnet, dass** die Messungen während eines gleichmäßigen Verlangsamungstests zwischen der maximalen Geschwindigkeit Vmax und der minimalen Geschwindigkeit Vmin durchgeführt werden.

7. Prognoseverfahren nach einem der Ansprüche 1 bis 6, **dadurch gekennzeichnet, dass** zur Durchführung der Messungen mit der minimalen Frequenz (Fmin) gering oder Null eine Massenunregelmäßigkeit zur montierten Bezugseinheit (EMR) hinzugefügt wird.

8. Prognoseverfahren nach Anspruch 1, **dadurch gekennzeichnet, dass** die Unregelmäßigkeiten durch die Zwischenfügung von N "Keilen" mit geeigneten Abmessungen erzeugt werden, die gleichmäßig zwischen mindestens einem der Wülste des Luftreifens und seinem Montagerad verteilt sind, um die Wülste in axialer Richtung lokal anzunähern.

9. Prognoseverfahren nach Anspruch 1, **dadurch gekennzeichnet, dass** die Unregelmäßigkeiten durch die Zwischenfügung von N "Keilen" mit geeigneten Abmessungen erzeugt werden, die gleichmäßig zwischen mindestens einem der Wülste des Luftreifens und dem Sitz seines Montagerads verteilt sind.

10. Prognoseverfahren nach Anspruch 1, **dadurch gekennzeichnet, dass,** da der Luftreifen Flanken enthält, die die Wülste des Luftreifens mit dem Laufstreifen verbinden, die Unregelmäßigkeiten durch die Zwischenfügung von N "Keilen" mit geeigneten Abmessungen erzeugt werden, die gleichmäßig zwischen mindestens einem der Wülste des Luftreifens und dem Sitz seines Montagerads verteilt sind.

EP 1 354 183 B1

FIG. 1

**FIG. 2**

**FIG. 3**

**FIG. 4**

**FIG. 5**